# FASCICULE DE BREVET EUROPEEN

(11) **EP 2 631 892 B1**
(45) Date de publication et mention de la délivrance du brevet: **20.07.2016**
(21) Numéro de dépôt: 13168031.6
(22) Date de dépôt: 08.05.2009
(51) Int. Cl.: G09F 3/02, G09F 3/20, G06K 19/077

(54) **Dispositif d'identification, conteneur pourvu d'un tel dispositif et procédé de montage de l'ensemble**
Identifizierungsvorrichtung, mit einer solchen Vorrichtung ausgestatteter Behälter, und Montageverfahren dieser Einheit
Identification device, container provided with such a device and method of mounting the assembly

(43) Date de publication de la demande: 28.08.2013
(62) Demande divisionnaire de: 09380098.5
(73) Titulaire: Athelia Solutions Iberica S.L., 28760 Tres Cantos (ES); Athelia Solutions, 75007 Paris (FR)
(72) Inventeur: Garcia Contreras, Gonzalo, 78112 Fourqueux (FR); Soria Colmenero, Gloria, 28232 Madrid (ES)
(74) Mandataire: De Cuenca, Emmanuel Jaime

(56) Documents cités:
- EP-A- 0 586 083
- EP-A- 1 011 069
- EP-A- 1 011 070
- FR-A- 2 637 021
- US-A- 5 555 655
- US-A- 5 697 173

## Description

La présente invention concerne un dispositif d'identification, un conteneur pourvu d'un tel dispositif et un procédé de montage de l'ensemble.

L'invention concerne plus particulièrement un dispositif d'identification pour conteneur de fluide, notamment pour conteneur de gaz, comprenant un organe électronique d'identification à distance tel qu'une antenne à radio-identification (RFID), l'organe électronique d'identification étant disposé dans ou sur un support, ledit support étant destiné à être fixé mécaniquement sur un conteneur de fluide.

Il est connu de fixer des dispositifs d'identification électronique interrogeables à distance sur des cylindres ou des bouteilles de fluides.

Ces dispositifs électroniques d'identification à distance utilisent généralement la technologie de radio-identification plus souvent désignée par le sigle « RFID » (de l'anglais Radio Frequency IDentification).

Cette technologie permet de mémoriser et de récupérer des données à distance en utilisant des marqueurs appelés « radio-étiquettes » (« RFID tag » ou « RFID transponder » ou « tag » en anglais).

Ces radio-étiquettes sont de petits objets qui comprennent généralement une antenne associée à une puce électronique et éventuellement une pile pour recevoir et/ou répondre aux requêtes radio émises depuis un émetteur-récepteur.

Ces radios-étiquettes sont généralement fixées sur un boîtier ou un substrat. Les radios-étiquettes sont par exemple encapsulées dans le boîtier via, par exemple, une résine.

Cette technologie est notamment utilisée pour la gestion d'un stock de conteneurs ou bouteilles (GPL, fluide alimentaire...) notamment lors de leur conditionnement. Pour fixer le dispositif d'identification sur un conteneur il est généralement prévu de coller ou de riveter le boîtier sur un chapeau de protection du robinet du conteneur. Selon d'autres solutions, le dispositif d'identification est fixé directement sur le corps du conteneur.

Le document EP-A-1011070 divulgue un dispositif d'identification comprenant un boîtier annulaire contenant une antenne et un collier intermédiaire disposés autour du col d'un conteneur de gaz. La fixation du dispositif d'identification est réalisée par engagement d'un bord interne du boîtier annulaire dans une rainure circulaire du collier et assemblage de deux demi-anneaux du boîtier annulaire autour du collier.

Le document EP-A-1011069 divulgue un dispositif d'identification comprenant un boîtier annulaire et un collier reposant sur ledit boîtier annulaire. L'ensemble formé par le boîtier annulaire et le collier est destiné à être monté sur le col d'un conteneur de gaz de manière à ce que le boîtier soit fixé de façon permanente.

Le document US5697173 divulgue un dispositif d'identification comprenant un boîtier annulaire et un anneau de verrouillage permettant de maintenir le boîtier annulaire autour du col d'une bouteille. L'anneau de verrouillage est agencé dans un logement du boîtier annulaire.

Le document US5555655 divulgue un anneau d'identification agencé autour du col fileté d'un conteneur de fluide et bloqué par serrage entre un collier de protection et le chapeau du conteneur. La fixation de l'anneau est réalisée par des pattes flexibles solidaires de l'anneau et s'engageant dans les filets du col.

Le document EP-A-0586083 divulgue un dispositif d'identification comprenant un boîtier annulaire libre autour du col d'une bouteille de gaz.

Le document FR-A-2637021 divulgue un régulateur de la pression du carburant d'un moteur à injection. Le régulateur est bloqué dans un logement fixe au moyen d'une épingle en butée au-dessus d'une collerette formée sur le régulateur, l'épingle coopérant avec des orifices aménagés dans le logement fixe.

Cependant, ces modes de fixations sont relativement coûteux et complexes à échelle industrielle. De plus, du fait de la variété des conteneurs (forme, structure et matériaux), la fixation et le positionnement des dispositifs d'identification peut conduire à des problèmes de bonne lecture des informations. En effet, des conteneurs adjacents sur des chaînes de convoyage peuvent créer des interférences entre les dispositifs d'identification adjacents.

Un but de la présente invention est de pallier tout ou partie des inconvénients de l'art antérieur relevés ci-dessus.

A cette fin, le dispositif d'identification selon l'invention, par ailleurs conforme à la définition générique qu'en donne le préambule ci-dessus, est essentiellement caractérisé en ce que le support comporte un boîtier annulaire ayant un diamètre compris entre 3 et 15 cm pour permettre sa disposition autour d'un orifice d'un conteneur, le boîtier annulaire comportant au moins une surface d'attache s'étendant vers l'ouverture centrale dudit boîtier annulaire, en position montée, le boîtier annulaire étant destiné à être situé autour dudit robinet avec la surface d'attache située entre le corps d'un conteneur et le corps dudit robinet fixé sur le conteneur, la surface d'attache comprend des organes de fixation amovibles coopérant sélectivement avec le boîtier annulaire pour réaliser une solidarisation ou une désolidarisation sélective de la surface d'attache par rapport au boîtier annulaire, la surface d'attache comprend une broche, le boîtier annulaire comportant sur sa périphérie un ou des orifices destinés à accueillir sélectivement l'une ou les extrémités de la broche formant la surface d'attache, la broche traversant le corps du boîtier pour s'étendre dans l'ouverture centrale de ce dernier.

Par ailleurs, des modes de réalisation de l'invention peuvent comporter l'une ou plusieurs des caractéristiques suivantes :
- la surface d'attache réduit au moins localement les dimensions de l'ouverture centrale délimitée par le boîtier annulaire d'une valeur comprise entre 1 et 6 cm et de préférence de 2 à 4 cm,
- la surface d'attache forme un rebord continu ou discret à l'intérieur de l'ouverture centrale dudit boîtier annulaire,
- la surface d'attache est monobloc avec le boîtier annulaire,
- la surface d'attache comporte des parties ou pattes flexible pour permettre d'enfiler le boîtier annulaire sur une valve ou un robinet ayant des dimensions transverses supérieure ou égales à l'ouverture centrale délimitée par la surface d'attache par déformation élastique de la surface d'attache,
- la surface d'attache a une épaisseur comprise entre 0,5mm et 10mm et de préférence entre 1 et 4mm, ladite épaisseur de la surface d'attache étant inférieure à l'épaisseur du boîtier annulaire,
- la broche comporte un ou des bras espacés formant chacun une surface d'attache.

L'invention concerne également un conteneur, notamment de fluide sous pression, comportant un orifice de remplissage et/ou de soutirage et un robinet disposé dans l'orifice, le conteneur comportant un dispositif d'identification conforme à l'une quelconque des caractéristiques ci-dessus ou ci-après, ledit dispositif d'identification étant disposé autour du robinet et autour de l'orifice et maintenu en position par butée d'au moins une partie de sa surface d'attache entre le corps du robinet et le corps du conteneur.

Selon d'autres particularités possibles le dispositif d'identification est maintenu en position par serrage d'au moins une partie de sa surface d'attache entre le corps du robinet et le corps du conteneur.

L'invention concerne également un procédé de montage d'un dispositif d'identification conforme à l'une quelconque des caractéristiques ci-dessus ou ci-après sur un conteneur, notamment de fluide sous pression, comportant un orifice de remplissage et/ou de soutirage et un robinet fixé dans l'orifice du conteneur, le procédé comportant une première étape de montage d'un robinet dans l'orifice du conteneur, une seconde étape de pose du dispositif d'identification autour de l'orifice du conteneur en enfilant et passant le boîtier annulaire le long du robinet déjà monté sur le conteneur, une troisième étape de fixation de la surface d'attache sur le boîtier annulaire pour positionner et bloquer en position la surface d'attache entre le corps du conteneur et le corps du robinet.

L'invention peut concerner également tout dispositif ou procédé alternatif comprenant toute combinaison des caractéristiques ci-dessus ou ci-dessous.

D'autres particularités et avantages apparaîtront à la lecture de la description ci-après, faite en référence aux figures dans lesquelles :
- la figure 1 représente une vue de dessus et schématique d'un premier exemple de réalisation possible d'un dispositif d'identification selon l'invention,
- la figure 2 illustre une demi-section transversale selon la ligne AA du dispositif d'identification de la figure 1,
- la figure 3 représente une vue de dessus et schématique d'un second exemple de réalisation possible d'un dispositif d'identification selon l'invention,
- la figure 4 illustre une demi-section transversale selon la ligne BB du dispositif d'identification de la figure 3,
- la figure 5 illustre une demi-section transversale d'un troisième exemple possible de réalisation du dispositif d'identification selon l'invention,
- la figure 6 représente une vue de dessus et schématique d'un quatrième exemple de réalisation possible d'un dispositif d'identification selon l'invention en position montée sur un robinet,
- la figure 7 illustre une vue en perspective du dispositif de la figure 6 en position partiellement montée sur le robinet,
- la figure 8 illustre une vue en perspective, schématique et partielle, d'un exemple de montage d'un dispositif d'identification selon l'invention sur un robinet équipé d'un robinet ou d'une valve,
- la figure 9 illustre une vue en coupe verticale de l'ensemble de la figure 8,
- la figure 10 illustre une vue de dessous d'un exemple possible de réalisation du boîtier 2 de la figure 3,
- la figure 11 illustre une demi-section transversale d'un quatrième exemple possible de réalisation du dispositif d'identification selon l'invention.

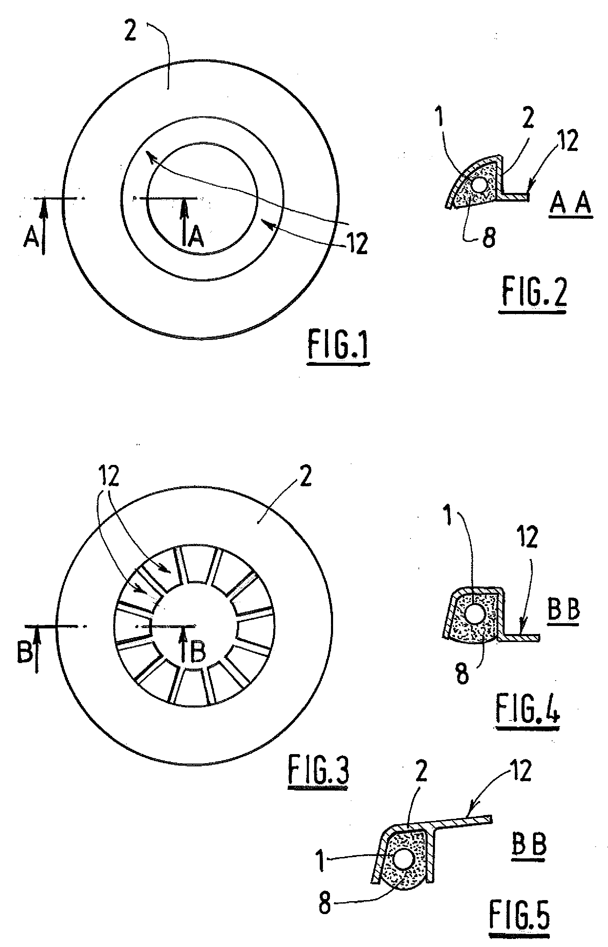

En se référant aux figures 1 et 2, le dispositif d'identification, notamment pour conteneur de fluide, comprend un support 2 formant un boîtier annulaire circulaire. Le boîtier est par exemple en matériau plastique. Un organe électronique d'identification 1 est disposé à l'intérieur du boîtier 2 annulaire. L'organe électronique d'identification 1 peut comprendre notamment une antenne circulaire. L'organe électronique d'identification 1 est par exemple maintenu dans le boîtier via une résine 8 ou tout autre élément approprié connu en soi. (Le boîtier 2 peut être ouvert dans sa partie inférieure). L'antenne 1 peut être notamment une antenne en forme d'anneau plat (0,5mm d'épaisseur) ou une antenne en forme de capsule ou tout autre dispositif électronique approprié.

De préférence, le boîtier 2 annulaire a un diamètre compris entre 3 et 15 cm, par exemple entre 3 et 8 cm.

Dans sa partie centrale (à l'intérieur de l'anneau formé par le boîtier 2), le boîtier annulaire 2 comporte une surface d'attache 12 s'étendant radialement vers l'intérieur dudit boîtier annulaire 2. Dans l'exemple des figures 1 et 2, la surface 12 d'attache est un rebord circulaire solidaire (monobloc) avec le boîtier 2. La surface d'attache 2 a par exemple un diamètre compris entre 3 et 6 cm. La surface d'attache a par exemple une épaisseur comprise entre 0,5mm et 10mm et de préférence entre 1 et 4mm. De préférence l'épaisseur de la surface 12 d'attache est inférieure à l'épaisseur du boîtier annulaire 2.

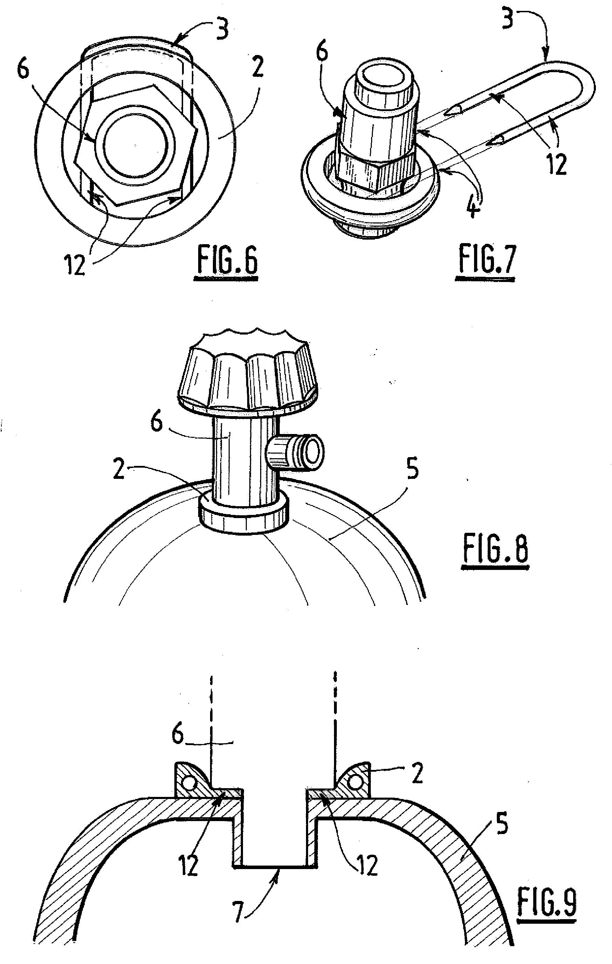

De cette façon, en position montée sur un conteneur (figures 8 et 9), le boîtier annulaire 2 est disposé autour de l'orifice 7 du conteneur 5 et autour du robinet 5 (ou de la valve) fixé dans l'orifice 7. La surface 12 d'attache assure le maintien mécanique du dispositif d'identification sur le conteneur 5 en étant située ou prise en sandwich entre le corps d'un conteneur 5 et le corps du robinet 6 fixé sur le conteneur.

Ceci permet de fixer un dispositif d'identification standard sur des conteneurs différents. Le dispositif d'identification peut notamment être placé sur le conteneur 5 (autour de l'orifice 7) avant la fixation du robinet 6 ou de la valve dans l'orifice 7. De préférence, lorsque le robinet 6 est ensuite fixé, le dispositif d'identification ne peut être retiré indépendamment du robinet 6 sans endommager ledit dispositif d'identification.

Le montage peut être manuel et/ou automatique.

Comme représenté aux figures 3 et 4, la surface d'attache 2 peut comprendre des parties discrètes, c'est-à-dire une pluralité de portions indépendantes ou distinctes.

De plus, tout ou partie de la surface 12 d'attache (pattes 12, figure 4) peut être flexible pour permettre d'enfiler le boîtier annulaire 2 sur une valve ou un robinet 6 ayant des dimensions transverses supérieure ou égales à l'ouverture centrale délimitée par la surface d'attache 12.

De cette façon, le dispositif d'identification peut, comme décrit précédemment, être placé sur le conteneur (autour de l'orifice 7) avant la fixation du robinet 6.

Cependant, en cas de surface 12 d'attache flexible, le dispositif d'identification peut également être placé sur le conteneur 5 (autour de l'orifice 7) après la fixation du robinet 6. La configuration de surface 12 d'attache permet le montage sur le robinet 6 par déformation élastique mais rend difficile ou empêche l'opération inverse (retrait vers le haut) du dispositif d'identification. Par exemple, la surface 12 d'attache peut avoir une orientation (inclinaison vers le haut par exemple) et une rigidité favorisant uniquement sa déformation dans le sens du montage sur un robinet 6.

Comme représenté aux figures 2 et 4, la surface 12 d'attache peut être située dans un plan parallèle au plan du boîtier annulaire 2. Plus précisément, la surface 12 d'attache peut être située au niveau de l'extrémité inférieure du boîtier annulaire 2 (cf. figures 2 et 4, la position supérieure faisant référence à sa position verticale et montée sur un conteneur).

Bien entendu, et comme représenté à la figure 5, la surface 12 d'attache peut être située au niveau de l'extrémité supérieure du boîtier 2 annulaire.

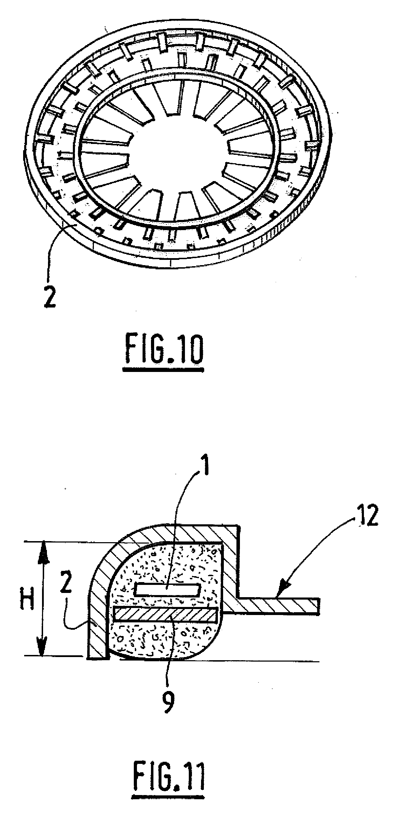

De même, la surface d'attache 12 peut être située à n'importe quel niveau du boîtier 2 (par exemple à mi-hauteur comme visible sur la figure 11). La hauteur H (profondeur verticale) du boîtier 2 est adaptée en fonction du matériau du conteneur de destination. Cette hauteur H est par exemple comprise entre 2mm et 20mm et de préférence entre 5 mm et 10mm, notamment pour des conteneurs métallique.

Dans le mode de réalisation illustré aux figures 6 et 7, la surface 12 d'attache peut être sélectivement solidarisée ou désolidarisé par rapport au boîtier 2 annulaire.

Par exemple, le boîtier 2 et la surface 12 d'attache comprennent des organes de fixation amovibles conjugués permettant une solidarisation ou une désolidarisation sélective de la surface d'attache 12 par rapport au boîtier annulaire 2.

Par exemple, la surface 12 d'attache comprend une broche 3 en U et le boîtier 2 annulaire comporte un ou des orifices 4 destinés à accueillir sélectivement l'une ou les extrémités de la broche 3. En position montée, la broche 3 traverse le corps du boîtier 2 pour s'étendre dans l'ouverture centrale du boîtier annulaire 2. De cette façon, les deux bras parallèle de la broche en U forment chacun une surface 12 d'attache amovible.

Le fait de prévoir une surface 12 d'attache amovible comme dans l'exemple des figures 6 et 7, permet un montage dans lequel le boîtier 2 annulaire est disposé autour de l'orifice 7 du conteneur en enfilant et passant le boîtier annulaire 2 le long de la valve ou du robinet 6 déjà monté sur le conteneur 5. La surface 12 d'attache peut ensuite être fixée sur le boîtier annulaire 2 pour se positionner entre le corps du conteneur 5 et le corps du robinet 6 de façon à bloquer en position le dispositif d'identification. Par exemple, la fixation de la surface 12 d'attache sur le boîtier annulaire 2 est réalisée par encliquetage.

Bien entendu, d'autres particularités sont possibles.

L'organe électronique d'identification à distance peut être prévu pour fonctionner à toute fréquence envisageable (depuis les basses fréquences jusqu'aux micro-ondes).

Comme illustré par exemple à la figure 10, la surface interne du boîtier 2 peut comporter des nervures (par exemple horizontales et/ou verticales) pour améliorer la cohésion avec la résine 8 qui viendra remplir le volume creux et noyer les composants électroniques.

On comprend donc aisément que tout en étant de structure simple et peu coûteuse, l'invention permet de fixer efficacement et avec une grande sécurité d'utilisation un dispositif d'identification sur des conteneurs très différents structurellement.

L'invention permet d'améliorer la fixation du dispositif d'identification sur un conteneur. De plus, les performances de lecture du champ magnétique du dispositif d'identification sont améliorées.

En effet, le positionnement du dispositif d'identification sur le conteneur selon l'invention permet de mieux assurer le couplage magnétique entre le dispositif d'identification et le corps conteneur (positionnement maîtrisé grâce au boîtier notamment). De cette façon, la fréquence du dispositif d'identification (antenne) est choisie (« detuned ») de façon à tenir compte de l'impact magnétique du conteneur sur lequel le dispositif est fixé.

Pour isoler magnétiquement le dispositif d'identification du corps du conteneur, et améliorer les performances de lecture magnétique du dispositif, il est possible de prévoir une couche 9 de matériau isolant tel qu'une ferrite disposée entre l'organe électronique d'identification (antenne 1) et le corps du conteneur.

## Revendications

1. Dispositif d'identification pour conteneur de fluide comprenant un organe électronique d'identification (1) à distance tel qu'une antenne à radio-identification (RFID), l'organe électronique d'identification (1) étant disposé dans ou sur un support (2), ledit support (2) étant destiné à être fixé mécaniquement sur un conteneur de fluide et comportant un boîtier annulaire ayant un diamètre compris entre 3 et 15 cm pour permettre sa disposition autour d'un orifice d'un conteneur, le boîtier annulaire (2) comportant au moins une surface (12) d'attache s'étendant vers l'ouverture centrale dudit boîtier annulaire (2), en position montée, le boîtier annulaire (2) étant destiné à être situé autour dudit robinet avec la surface (12) d'attache située entre le corps d'un conteneur et le corps dudit robinet fixé sur le conteneur, la surface (12) d'attache comprenant des organes de fixation amovibles coopérant sélectivement avec le boîtier annulaire (2) pour réaliser une solidarisation ou une désolidarisation sélective de la surface (12) d'attache par rapport au boîtier annulaire (2), **caractérisé en ce que** la surface (12) d'attache comprend une broche (3) et **en ce que** le boîtier (2) annulaire comporte sur sa périphérie un ou des orifices (4) destinés à accueillir sélectivement l'une ou les extrémités de la broche formant la surface (12) d'attache, la broche (3) traversant le corps du boîtier (2) pour s'étendre dans l'ouverture centrale de ce dernier.

2. Dispositif d'identification selon la revendication 1, **caractérisé en ce que** la broche (3) comporte un ou des bras espacés formant chacun une surface (12) d'attache.

3. Dispositif d'identification selon l'une quelconque des revendications 1 ou 2, **caractérisé en ce que** la solidarisation de la surface (12) d'attache sur le boîtier annulaire (2) est réalisée par encliquetage.

4. Dispositif selon l'une quelconque des revendications 1 à 3, **caractérisé en ce que** la broche (3) comporte deux bras parallèles formant chacun une surface (12) d'attache.

5. Dispositif selon l'une quelconque des revendications 1 à 4, **caractérisé en ce que** la surface (12) d'attache réduit au moins localement les dimensions de l'ouverture centrale délimitée par le boîtier annulaire (2) d'une valeur comprise entre 1 et 6 cm et de préférence de 2 à 4 cm.

6. Dispositif d'identification selon l'une quelconque des revendications 1 à 5, **caractérisé en ce que** la surface (12) d'attache a une épaisseur comprise entre 0,5mm et 10mm et de préférence entre 1 et 4mm, ladite épaisseur de la surface (12) d'attache étant inférieure à l'épaisseur du boîtier annulaire (2).

7. Conteneur (5), notamment de fluide sous pression, comportant un orifice (7) de remplissage et/ou de soutirage et un robinet (6) disposé dans l'orifice (7), **caractérisé en ce qu'**il comporte un dispositif d'identification conforme à l'une quelconque des revendications 1 à 6 disposé autour du robinet et autour de l'orifice (7), ledit dispositif d'identification étant maintenu en position par butée d'au moins une partie de sa surface (12) d'attache entre le corps du robinet (6) et le corps du conteneur (5).

8. Procédé de montage d'un dispositif d'identification conforme à l'une quelconque des revendications 1 à 6 sur un conteneur (5), notamment de fluide sous pression, comportant un orifice (7) de remplissage et/ou de soutirage et un robinet (6) fixé dans l'orifice du conteneur, **caractérisé en ce qu'**il comporte une première étape de montage d'un robinet dans l'orifice (7) du conteneur, une seconde étape de pose du dispositif d'identification autour de l'orifice (7) du conteneur en enfilant et passant le boîtier annulaire (2) le long du robinet (6) déjà monté sur le conteneur (5), une troisième étape de fixation de la surface (12) d'attache sur le boîtier annulaire (2) pour positionner et bloquer en position la surface d'attache (12) entre le corps du conteneur (5) et le corps du robinet (6).

9. Procédé selon la revendication 8, **caractérisée en ce que** la troisième étape de fixation de la surface (12) d'attache sur le boîtier annulaire (2) est réalisée par encliquetage.

## Patentansprüche

1. Identifizierungsvorrichtung für einen Fluidbehälter, ein elektronisches Organ zur Identifizierung (1) aus der Ferne, wie eine Antenne mit Funkidentifizierung (RFID) umfassend, wobei das elektronische Organ zur Identifizierung (1) in oder an einem Träger (2) angeordnet ist, wobei der besagte Träger (2) dazu bestimmt ist, mechanisch auf einem Fluidbehälter befestigt zu werden, und ein ringförmiges Gehäuse mit einem Durchmesser zwischen 3 und 15 cm umfassend, um seine Anordnung um eine Öffnung eines Behälters herum zu ermöglichen, wobei das ringförmige Gehäuse (2) mindestens eine Befestigungsfläche (12) aufweist, die sich in montierter Position zu der mittleren Öffnung des besagten ringförmigen Gehäuses (2) hin erstreckt, wobei das ringförmige Gehäuse (2) dazu bestimmt ist, sich um den besagten Hahn herum zu befinden, mit der Befestigungsfläche (12) zwischen dem Körper eines Behälters und dem Körper des besagten Hahns, der auf dem Behälter befestigt ist, wobei die Befestigungsfläche (12) abnehmbare Befestigungsorgane umfasst, die selektiv mit dem ringförmigen Gehäuse (2) zusammenwirken, um ein selektives Befestigen oder ein selektives Lösen der Befestigungsfläche (12) relativ zu dem ringförmigen Gehäuse (2) zu realisieren, **dadurch gekennzeichnet, dass** die Befestigungsfläche (12) einen Stift (3) umfasst und dass das ringförmige Gehäuse (2) an seinem Umfang eine oder mehrere Öffnungen (4) aufweist, die dazu bestimmt sind, selektiv ein oder die Enden des Stifts, der die Befestigungsfläche (12) bildet, aufzunehmen, wobei der Stift (3) den Körper des Gehäuses (2) durchquert, um sich in der mittleren Öffnung dieses Letzten zu erstrecken.

2. Identifizierungsvorrichtung nach Anspruch 1, **dadurch gekennzeichnet, dass** der Stift (3) einen oder mehrere beabstandete Arme umfasst, die jeweils eine Befestigungsfläche (12) bilden.

3. Identifizierungsvorrichtung nach einem der Ansprüche 1 oder 2, **dadurch gekennzeichnet, dass** die Befestigung der Befestigungsfläche (12) auf dem ringförmigen Gehäuse (2) durch Einrasten erfolgt.

4. Vorrichtung nach einem der Ansprüche 1 bis 3, **dadurch gekennzeichnet, dass** der Stift (3) zwei parallele Arme umfasst, die jeweils eine Befestigungsfläche (12) bilden.

5. Vorrichtung nach einem der Ansprüche 1 bis 4, **dadurch gekennzeichnet, dass** die Befestigungsfläche (12) die Abmessungen der mittleren Öffnung, die durch das ringförmige Gehäuse (2) begrenzt wird, mindestens lokal um einen Wert verringert, der zwischen 1 und 6 cm und bevorzugt von 2 bis 4 cm beträgt.

6. Identifizierungsvorrichtung nach einem der Ansprüche 1 bis 5, **dadurch gekennzeichnet, dass** die Befestigungsfläche (12) eine Dicke hat, die zwischen 0,5 mm und 10 mm und bevorzugt zwischen 1 und 4 mm beträgt, wobei die besagte Dicke der Befestigungsfläche (12) kleiner als die Dicke des ringförmigen Gehäuses (2) ist.

7. Behälter (5) insbesondere für unter Druck stehendes Fluid, mit einer Öffnung (7) zum Befüllen und/oder zum Entnehmen und einem Hahn (6), der in der Öffnung (7) angeordnet ist, **dadurch gekennzeichnet, dass** er eine Identifizierungsvorrichtung nach einem der Ansprüche 1 bis 6 umfasst, die um den Hahn herum und um die Öffnung (7) herum angeordnet ist, wobei die besagte Identifizierungsvorrichtung durch Anschlag zumindest eines Teils ihrer Befestigungsfläche (12) zwischen dem Körper des Hahns (6) und dem Körper des Behälters (5) in Position gehalten wird.

8. Verfahren zur Montage einer Identifizierungsvorrichtung nach einem der Ansprüche 1 bis 6 auf einem Behälter (5) insbesondere für unter Druck stehendes Fluid, mit einer Öffnung (7) zum Befüllen und/oder zum Entnehmen und einem Hahn (6), der in der Öffnung des Behälters befestigt ist, **dadurch gekennzeichnet, dass** es einen ersten Schritt des Montierens eines Hahns in der Öffnung (7) des Behälters umfasst, einen zweiten Schritt des Anordnens der Identifizierungsvorrichtung um die Öffnung (7) des Behälters herum, indem das ringförmige Gehäuse (2) aufgesteckt und entlang des bereits an dem Behälter (5) montierten Hahns (6) geführt wird, einen dritten Schritt des Befestigens der Befestigungsfläche (12) an dem ringförmigen Gehäuse (2), um die Befestigungsfläche (12) in Position zwischen dem Körper des Behälters (5) und dem Körper des Hahns (6) zu positionieren und zu blockieren.

9. Verfahren nach Anspruch 8, **dadurch gekennzeichnet, dass** der dritte Schritt des Befestigens der Befestigungsfläche (12) auf dem ringförmigen Gehäuse (2) durch Einrasten erfolgt.

## Claims

1. Identification device for a fluid container comprising an electronic remote identification member (1) such as a radio-frequency identification (RFID) antenna, the electronic identification member (1) being arranged in or on a support (2), said support (2) being intended to be mechanically fastened to a fluid container, the support comprising an annular housing having a diameter of between 3 and 15 cm in order to allow it to be arranged around an aperture of a container, the annular housing (2) having at least one attachment surface (12) which extends, in the assembled position, towards the central opening of said annular housing (2), the annular housing (2) being intended to be located around said valve with the attachment surface (12) located between the body of a container and the body of said valve which is fastened to the container, the attachment surface (12) comprising removable fasteners which cooperate selectively with the annular housing (2) in order to produce selective connection or disconnection of the attachment surface (12) relative to the annular housing (2), **characterised in that** the attachment surface (12) comprises a pin (3), and **in that** the annular housing (2) comprises at its periphery one or more apertures (4) which are intended to selectively accommodate the one or more ends of the pin forming the attachment surface (12), the pin (3) passing through the body of the housing (2) in order to extend into the central opening thereof.

2. Identification device according to claim 1, **characterised in that** the pin (3) comprises one or more branches at a distance from one another, each forming an attachment surface (12).

3. Identification device according to any of claims 1 or 2, **characterised in that** the attachment surface (12) is secured to the annular housing (2) by interlocking.

4. Device according to any of claims 1 to 3, **characterised in that** the pin (3) comprises two parallel branches, each forming an attachment surface (12).

5. Device according to any of claims 1 to 4, **characterised in that** the attachment surface (12) reduces, at least locally, the dimensions of the central opening delimited by the annular housing (2) by a value of between 1 and 6 cm and preferably of from 2 to 4 cm.

6. Identification device according to any of claims 1 to 5, **characterised in that** the attachment surface (12) has a thickness of between 0.5 mm and 10 mm, and preferably between 1 and 4 mm, said thickness of the attachment surface (12) being less than the thickness of the annular housing (2).

7. Container (5), in particular for pressurised fluid, comprising a fill and/or discharge aperture (7) and a valve (6) arranged in the aperture (7), **characterised in that** it comprises an identification device in accordance with any of claims 1 to 6, arranged around the valve and around the aperture (7), said identification device being held in position by the clamping of at least part of its attachment surface (12) between the body of the valve (6) and the body of the container (5).

8. Method for installing an identification device according to any of claims 1 to 6 on a container (5), in particular for pressurised fluid, comprising a fill and/or discharge aperture (7) and a valve (6) which is fastened in the aperture of the container, **characterised in that** it includes a first step of installing a valve in the aperture (7) of the container, a second step of placing the identification device around the aperture (7) of the container by fitting and guiding the annular housing (2) along the valve (6) which is already installed on the container (5), a third step of fastening the attachment surface (12) to the annular housing (2) in order to position the attachment surface (12) between the body of the container (5) and the body of the valve (6) and lock it in position.

9. Method according to claim 8, **characterised in that** the third step of fastening the attachment surface (12) on the annular housing (2) takes place by interlocking.
